# EUROPEAN PATENT SPECIFICATION

(11) **EP 0 669 903 B1**
(45) Date of publication and mention of the grant of the patent: **05.04.2000**
(21) Application number: 94927457.5
(22) Date of filing: 13.09.1994
(51) Int. Cl.: C05F 3/04, C05F 3/06, C05F 17/02, A47K 11/02

(54) **METHOD AND APPARATUS FOR DISPOSAL AND TREATMENT OF WASTE**
VERFAHREN UND VORRICHTUNG ZUR ENTSORGUNG UND BEHANDLUNG VON ABFÄLLEN
PROCEDE ET APPAREIL POUR L'ELIMINATION ET LE TRAITEMENT DES DECHETS

(30) Priority: 13.09.1993 WO PCT/AU93/00470
(43) Date of publication of application: 06.09.1995
(73) Proprietor: DOWMUS PTY. LTD., Nambour, QLD 4560 (AU)
(72) Inventor: CAMERON, Dean Osman, Maleny, QLD 4552 (AU)
(74) Representative: Enskat, Michael Antony Frank
(86) International application number: AU9400553
(87) International publication number: WO9507872

(56) References cited:
- EP-A- 0 485 358
- EP-A- 0 542 162
- WO-A-90/02720
- WO-A-92/10444
- WO-A-93/10060
- WO-A-94/06734
- AT-B- 394 357
- AU-A- 528 861
- AU-A- 4 132 193
- DE-A- 3 934 122
- FR-A- 2 151 410
- US-A- 5 171 690
- DERWENT ABSTRACT Accession No. 91-362701/50, Class Q24, Q35; & DE,A,4113993 (SOYEZ K) 5 December 1991 (05.12.91), Abstract.
- DERWENT ABSTRACT Accession No. 91-110677/16, Class Q35; & DE,C,4002174 (GEBR OTTO KG) 18 April 1991 (18.04.91), Abstract.
- DERWENT ABSTRACT Accession No. 86-111039/17, Class C04, D15; & JP,B,61 010 427 (TASEI CONSTRUCTION K K) 29 March 1986 (29.03.86), Abstract.

## Description

This invention relates to a method of and apparatus for disposal and treatment of waste.

This invention has particular but not exclusive application to the production of compost from domestic organic waste using a composting toilet, and for illustrative purposes, reference will be made to such an application. However, it is to be understood that this invention could be used in other applications such as production of compost and/or disposal of waste in industrial, commercial and other situations. Compost material may be defined as waste material that has become stable through biological action. Composting is performed in a compost bed which may be defined as a bed of composting and composted organic solid wastes, the composted material being completely decomposed organic matter and the composting material being material including raw organic wastes and decomposing organic material.

Organic wastes can be classified into two general forms. Solid wastes such as paper, cellulose based products, food wastes and yard wastes, can be defined as Organic Municipal Solid Wastes (OMSW). Liquid organic wastes, such as sullage water and sewage water, can be defined as Wastewater. Unless the context dictates otherwise, wastewater hereinafter may be taken to have this meaning.

Current waste treatment technologies are, with the exception of large scale methane digestion, based on separate treatment processes for the high solids OMSW and low solids wastewater. Typically the solids component of wastewater is separated from the water during anaerobic fermentation by sedimentation of the solids as a sludge which is then de-watered and is commonly composted with an organic bulking agent such as wood waste, or co-composted with OMSW.

In the past land disposal of the sludge mixed with lime to partially sanitise was common. Supernatant liquid formed as a result of the settling out of the solids from the wastewater in the primary treatment process is referred to as primary effluent which, without further, secondary treatment, is not safe to discharge into the general environment. A process to further treat the wastewater relying on aeration of the primary treated effluent in the presence of aerobic organisms, which utilise degradable organic matter and bacteria in the effluent, as food sources, and so purify the wastewater and reduce its environmental hazard has been developed and commercialised.

Further settling of sludge occurs in a secondary treatment vessel, designed to maximise the biological breakdown of suspended and dissolved organic matter, by a fixed or mobile biofilm of aerobic microbes. The primary effluent entering the secondary treatment vessel is aerated by blowing air over or through a large liquid contact surface to assist in and support the growth of the aerobic biofilm. After secondary treatment, the effluent is usually disinfected and discharged.

Such conventional methods of wastewater treatment have several disadvantages. The usual scale of treatment is at the municipal scale, where the process is reliant on high energy inputs for pumping, aeration, and construction of specialised apparatus for process control, monitoring, and materials handling, management and staffing inputs are high and a costly and complicated transport and treatment infrastructure is essential.

The municipal treatment of OMSW is similarly expensive and troublesome. Regulations are being formulated in many countries which prohibit OMSW disposal in landfill. Composting, though the most favoured method of treatment, is not without problems. Odour problems have caused some compost plant operators to enclose the operation so that odorous air may be filtered through a bio-filtration apparatus and/or odour scrubbers prior to discharge of the spent air.

This problem, coupled with high levels of contaminants if industrial wastes are combined with domestic wastewater, have caused some sewage plant operators to opt for incineration as a more convenient path despite the large amounts of energy required for drying before combustion.

Co-composting can often reduce the amount of municipal solid waste going to landfill by as much as 60%, representing a significant saving. Where co-composting of sewage sludge and OMSW is practiced, it is still expensive, due to the need to collect, sort, transport and process the organic portion before composting.

A large proportion of the cost associated with sewage sludge when centralised is attributed to establishing and maintaining systems for the collection and transport of the wastes, and transport of sewage sludge is the major cost involved. Wherever sewage sludge is incorporated, there can be consumer resistance to the product because of perceived health risks from biological and/or industrial contaminants.

On-site household wastewater treatment systems can, with proper maintenance, recycle water for gardens, whilst various household composting devices are being employed to recycle nutrients and humus back into the soil. The risk of spreading waterborne diseases should be lessened, but only where contact with wastewater is restricted to those likely to have developed immunity to any diseases contained in the wastewater.

On a household scale, on-site wastewater treatment is not preferred over centralised treatment, partly because of its inconsistent performance, and the requirement for ongoing monitoring of each installation. The anaerobic digestion stage is prone to the formation of bacterial scums and crusting which can lead to odour and performance problems.

Present household waste water treatment systems, need indefinite, specialised and costly management intervention, are sensitive to common household chemicals and require ongoing costly maintenance. At the household scale chlorine based disinfection is typically carried out on the liquid effluent, using hazardous chemicals and resulting in the production of toxic disinfection by-products. Additionally, on-site composting has the inconvenience the potential for vermin and disease vectors to gain access to such composting apparatus and requires sorting and user management intervention to produce good compost.

International Patent No WO 921044 discloses the treatment of human faeces and urine using a compost bed. Generally, the solids and liquids are treated by separate processes but some liquids are added to the solids essentially to promote the composting of the solid rather than to treat the liquids.

It is an object of the invention to provide an improved waste disposal treatment and apparatus.

According to the present invention there is provided organic waste disposal treatment apparatus for simultaneous treatment of solid wastes and waste water comprising a vessel having a inlet for receiving solid wastes, a composting chamber located below the inlet and supporting a compost bed provided with compost organisms so as to keep it open for internal aeration and allow it to act as a filter, a drainage system located below the composting chamber to receive the filtered waste water therefrom, ventilation means for causing air to be drawn into the compost bed to maintain aerobic conditioning therein and into the drainage system to aerate the filtered waste water received from the composting chamber, a drain for draining the filtered waste water from the drainage system control means for distributing waste water onto the compost bed and for controlling the flow thereof, and access means for accessing and removing of compost formed in the vessel.

According to the present invention there is further provided a method simultaneously treating solid organic waste and waste water in a vessel comprising the steps of preparing a compost bed provided with composting organisms for decomposing any solid organic waste deposited thereon, the organisms being such as to simultaneously keep the compost bed open for internal aeration and to allow the bed to act as a waste water filter, distributing the flow of waste water onto the bed and controlling its flow rate, drawing air through the compost bed and aerating the filtered waste water as it emerges from the compost bed, draining the aerated and filtered waste water from said reactor vessel, and removing the compost formed from said reactor vessel.

The access means may be a port through which compost may be removed, removal being accomplished in any desired manner. Alternatively, the access means may be an enclosed pathway extending upwardly from the base of the compost bed at the exterior of the treatment chamber assembly and which is filled through action of organisms. Preferably, however, the access means includes a closed conveyor for conveying compost from the lower zone of the compost bed.

The drainage means may be a liquid outlet from which treated liquid waste material drains gravitationally from the treatment chamber. Other forms of drainage means such as bailing means or pumping means may be used to prevent excess accumulation of water in the lower part of the compost bed as would promote anaerobic digestion of the waste material.

If desired, conveyor means may be used to transport the waste material from the inlet to the access means. The conveyor means may be a belt conveyor or elevator. Preferably, however, the arrangement of the treatment chamber assembly is such that in use, organic waste material introduced into treatment chamber will flow gravitationally towards the access means.

In one embodiment, a holding zone forms in use where substantially no further decomposition of solid waste material occurs, and the holding zone results from the configuration of the treatment chamber assembly whereby, in use, inactive material will accumulate beside and/or beneath the active compost bed. The inactive material may provide an alternative habitat for organisms in the compost bed should temperature conditions therein become elevated. In another embodiment the compost bed is transported as plug flow through the treatment chamber assembly towards the access means which is adapted to provide discharge of compost from the base of the compost bed. In this embodiment it is preferred that the treatment chamber assembly include waste water input means whereby a controlled flow of waste water is added over the upper surface of the compost bed. The waste water assists in oxygenating the compost bed, in maintaining the temperature within the compost bed within desirable limits. Metering means may be provided for preventing excess flow of waste water onto the compost bed.

The ventilation means may be an induced or natural ventilation of the compost bed. Preferably the ventilation means introduces air or oxygen into the treatment chamber assembly beneath or into the compost bed to facilitate aeration of the waste material. The ventilation means may include a spiral shelf extending around the compost bed and shielding a spiral chamber through which an air flow may be induced to ventilate the compost bed.

The treatment chamber assembly may include air permeable division means for dividing an air chamber or duct from the compost bed. The division means may be water permeable and divide a bottom portion of the treatment chamber assembly from the compost bed whereby air may be diffused into the compost bed from the bottom portion and water may be drained therethrough from the compost bed. The division means may be constituted by an air duct having an intermediated portion supported on and/or above the base wall of the treatment chamber and through which air may be introduced into the treatment chamber. The intermediate portion may be coiled about the base wall of the treatment chamber and may be imbedded in a permeable substrate such as charcoal. The intermediate portion is slotted or perforated or the like so as to ventilate the compost bed. Suitably the duct is constituted by flexible plastics agricultural pipe which is apertured for drainage. A length of such agricultural pipe may extend from an above ground inlet through the treatment chamber to an elevated weather cocked outlet and an air pump may be arranged in the pipe or in-line with the pipe to create a forced air flow into the treatment chamber and through the pipe.

The inlet means may be constituted by or include the outlet from one or more water closets. The inlet means may be constituted by or include a dry toilet, preferably located centrally above the treatment chamber assembly.

It is also preferred that the holding tank be partially filled with an active bed of compost. This may be provided with the apparatus, added separately after installation of the apparatus, or it may be formed during the initial use of the waste treatment apparatus by following a selected initialising use procedure.

The waste water purified by a single pass through a compost bed as described above may be further purified by passing it through a bed of aerated media through which air or ozonated air is drawn. The aerated media may be disposed at the base of the compost bed or it may be disposed remote from the compost bed. Suitably the ozone source is attached to or suspended within a duct leading to a perforated or air porous duct or ducts in the base of the chamber supporting the compost bed and encompassed within a suitable air porous media whereby ozonated air may be dispersed through an air porous media to effect disinfection and clarification of the effluent percolating through the air porous media.

Suitably the conditions within the compost bed are maintained such that waste water passing therethrough is purified through biological and physical/chemical processes.

The waste water may be spread over the surface of the compost bed via a surge control device. The latter may be provided with an overflow bypass and an irrigation/dispersal system incorporated into or attached to the surge control device.

If desired, a heat exchange coil may be located in the base of a compost bed which is suitably housed in a insulated container such that heat contained in the effluent may be recovered for useful purposes.

A method and apparatus for organic waste disposal treatment and embodying the invention, will now be described, by way of example, with reference to the accompanying diagrammatic drawings, in which:
FIG. 1 is a schematic cross section of a composting apparatus with a toilet pedestal according to a preferred embodiment of the invention;
FIG. 2 is a schematic cross section of a composting apparatus with a compost input chute according to a preferred embodiment of the invention; and
FIG. 3 is a schematic cross section of a composting toilet alternative to the embodiment of FIG. 1.

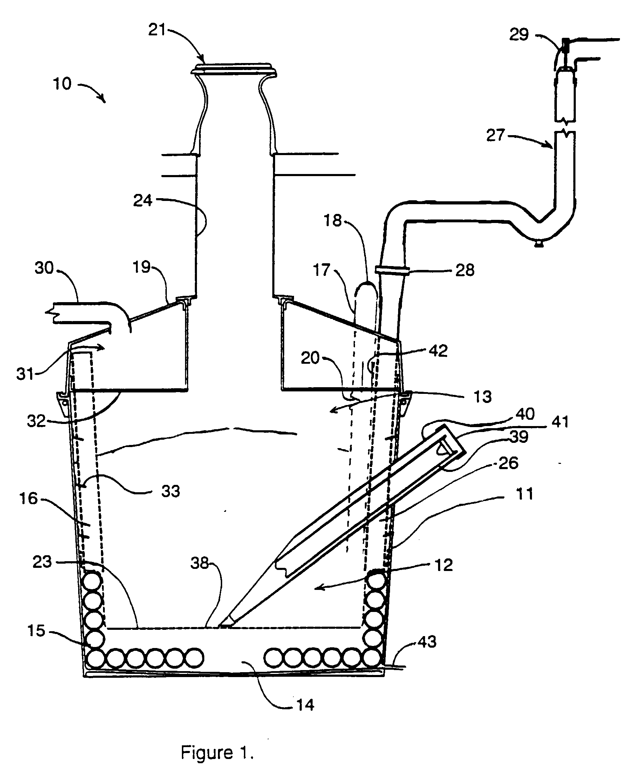

Referring to FIGS. 1, 2 and 3, a waste treatment apparatus 10 includes a compost reactor vessel 11 constructed of polyolefin plastic. The dimensions of the reactor vessel 11 are such that sufficient surface area is available to achieve a decomposition rate equal to the solid waste deposition rate. This has been found to be approximately 0.4 m² per equivalent person (EP) contributing to the system. The depth of the reactor vessel 11 should be sufficient to allow a compost bed 12 of at least 1.5 m to develop and still allow an air space 13 above the compost. For an average household, the reactor vessel 11 is 1.8 m in diameter and 1.9 in height is generally adequate.

The reactor vessel 11 is partially filled, with an active bed of compost 12. A minimum depth of 600 mm of stable compost is provided as a compost bed 12 which is supported by a structurally adequate drainage medium 14 preferably with a high surface area capable of supporting a growth of biofilm.

A drainage system 15, preferably of perforated flexible plastic ducting with a corrugated annular wall profile such as agricultural pipe or tubing is coiled about the bottom of the reactor vessel 11 and leading to a drain 43. Alternatively, a collection sump is formed in the base of the medium 14.

Air is drawn over the compost bed 12, down an internal vent duct 16 and under the compost bed 12 through the drainage system 15 such that the compost bed 12 and drainage system 15 are maintained with sufficient oxygen to substantially maintain aerobic conditions. The oxygen provided also aerates the wastewater passing through the drainage system 15 to increase the oxygen concentration prior to discharge from the reactor vessel 11.

Predatory beetles and earwigs and such like may be introduced to control fly larvae, and an insect trap 17 is incorporated into the reactor vessel 11 using the phenomenon that most flying insects are attracted to light. One or several lengths of tube, with a light source 18, preferably daylight via a transparent UV stable plastic dome at the upper end extend through a lid 19 to the reactor vessel 11 and into the compost bed 12.

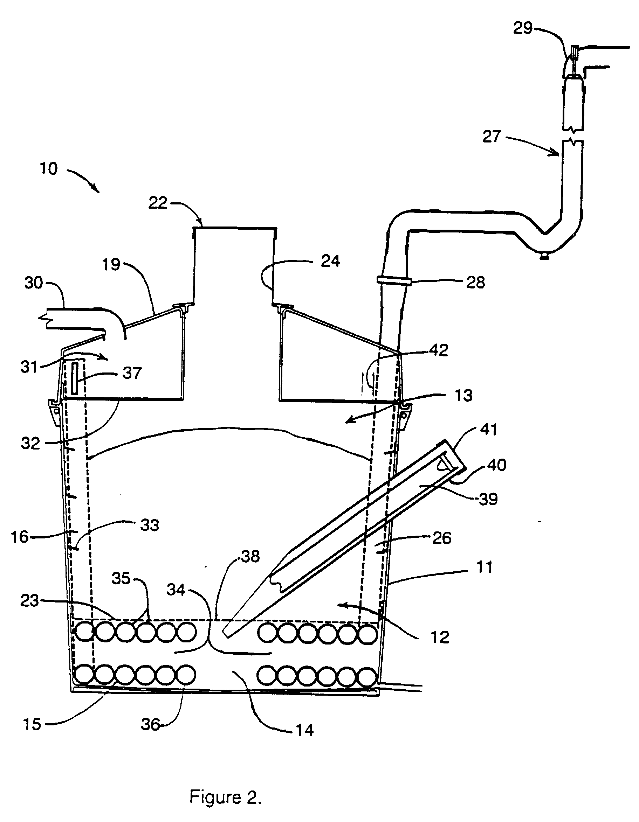

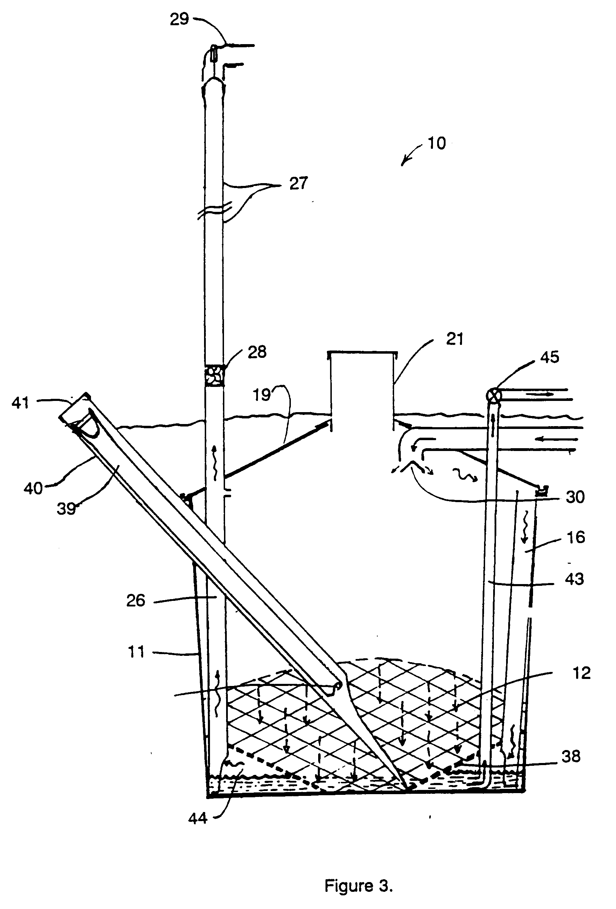

A light transmitting funnel shaped insert 20 projects into each insect trap 17 beneath the underside of the lid 19. The trapped insects die and fall into the compost bed 12 and decompose, thus alleviating intrusion of flying insects into a household if a waterless toilet pedestal 21 as shown in FIG. 1 or compost hatch 22 as shown in FIGS. 2 and 3 is incorporated therein.

The solids flow pattern is essentially a natural fall of material by gravity with fresh wastes added to the top surface of the compost bed 12 and the stable fully decomposed humic material accumulating at the base 23 of the compost bed 12 which functions as a biological wastewater filtration medium. Because of the behaviour of the worms and insects, there is some mixing of the lower material by deposition of frass, worm castings, exfoliation and/or cast off animal skins or casings onto the surface.

Preferably after the compost depth has built up to provide a sufficient depth of stable filtration medium, the finished compost is removed periodically from the central region of the base to maintain the compost bed profile at about 1.5 metres deep.

In municipal scale treatment systems, sewage sludge could be added to the system by conveyors and/or spreaders. In a domestic situation a waste entry chute can be provided by the pedestal 21 or the hatch 22 where a water flush toilet is used to input toilet wastes.

In both cases the waste is input directly and substantially centrally above the reactor vessel 11 so that wastes may drop under gravity onto the compost bed 12. A connecting chute 24 is blackened internally to minimise light reflection and serves as the air intake duct for the ventilation system to alleviate unwanted toilet room odours where the waterless toilet pedestal 21 is used. The connecting chute 24 may be unscreened since no odour trail is detectable to flies and other vermin which are attracted to the odour of decaying organic matter. Thus the waterless toilet pedestal 21 may be used without the need to seal or screen the toilet opening to prevent the entry of flying insects.

Air is drawn into the drainage system 15 below the compost bed 12 via the vent duct 16 which passes through the compost bed 12 and connects to the drainage system 15. If disinfection via ozonation is not required, an internal exhaust duct 26, connects to the other end of the drainage system 15 and passes up through the compost bed 12 and out through the lid 19.

A fan 28 is preferably connected to the top of the exhaust duct 26. Where no electricity is available a wind, passive solar and/or compost heated air convection system may be used to generate the required air flow. Exhaust air may be discharged via a vent stack 27 and wind vane venturi diffuser 29 to dissipate any diluted residual odours along with the carbon dioxide enriched air.

Wastewater is preferably led, from one or more flush toilet pedestals and/or sullage drains by a gravity drainage plumbing system 30, directly to a surge tank 31 with a flow control device 32, constituted by a perforated sheet, which permits wastewater to be pulsed onto the compost bed 12 over an extended period of time and spread more evenly over the composting bed 12. Wastewater application rates and distribution, should be such that surface ponding and short-circuiting of wastewater is avoided. An overflow by-pass 42 is provided for excessive amounts of liquid input.

A series of flow barriers 33 projecting into the compost bed 12 may be installed on the vessel side walls to prevent side wall short circuiting flow from reducing the effluent quality produced at high wastewater application rates. The wastewater treatment apparatus 10 does away with grease traps, since, during normal domestic usage any fats, grease or waxes are broken down within the compost.

In use, a range of beneficial composting organisms are introduced to inoculate or "seed" the compost bed 12, including composting worms, composting beetles, compost flies and such like typical of a soil litter layer or decomposing manure. The larger organisms work synergistically with fungi, bacteria, protozoa, nematodes and other microbes, (which are ubiquitous in such habitats), to effect the complete decomposition of all solid organic wastes as deposited onto the compost bed to effect rapid and near odourless decomposition of the total organic waste stream.

The worms and insects mix and turn the waste material, keeping it open and exposed to aeration internally, and so preventing it from becoming sour or putrid. The comminuting mouthparts and the anatomy of the gut of such organisms greatly expand the surface area of the organic waste material exposed to digestion and microbial decomposition.

Wetting of the waste paper and cardboard and other cellulose fibre wastes with the wastewater, weakens the materials and permits them to be broken up more easily and ingested. Insects can have a beneficial effect on treatment performance of the apparatus of this invention, but may be a nuisance if not controlled.

Experimental observations of the effluent treatment performance in on-site household treatment systems have shown that effluent with a biological oxygen demand over five days of less than 10 mg/l and suspended solids of 20 mg/l can be consistently expected and that the performance of the composting bed wastewater treatment system improves over time as the depth of fine stable compost increases. Additionally, experiments have shown that bleaches, detergents, fats and waxes, do not adversely affect the composting organisms, possibly because of the large proportion of organic carbon available to bind potentially toxic substances and inactivate or adsorb them.

Depending on the type of reuse proposed for the effluent, disinfection may be required. Disinfection could be by soil irrigation, slow sand biofiltration, artificial wetland treatment, ozonation, membrane filtration, UV radiation, chlorination or any other established technology deemed appropriate to achieve the standard of effluent required. If disinfection to body contact standard is required, sand or preferably crushed charcoal of a similar aggregate size, aerated with ozonated air could be incorporated into the base of the compost bed reaction vessel and so provide a simple, compact, and complete waste treatment system.

Referring in particular to FIG. 2, a convenient and cost effective means of creating an ozone disinfection filter in the base of the compost bed reactor vessel is to sandwich a layer of porous disinfection filter medium 34 between two unconnected tightly spiralled coils of annular fluted perforated plastic drainage pipe forming the drainage system 15. A negative pressure is applied to the upper coil 35 by the fan 28 in the exhaust ducting 26 such that ozonated air, produced by an ozone generator 37 in the vent duct 16 is drawn into a lower coil 36 and then through the disinfection medium 34 allowing ozonation of the effluent film covering the medium surfaces.

Oxygen in the air, and oxygen formed after the reaction of the ozone with effluent contaminants, supports a biofilm of beneficial organisms to consume any organic matter made degradable through ozonation. A geotextile fibre filter matting 38 resistant to breakdown may be placed between the compost reactor bed 12 and the disinfection medium 34 or the drainage system 15 of FIGS. 1 or 2, to prevent particulate compost fragments from clogging the disinfection medium 34. The partially disinfected effluent is drained from underneath the disinfection medium 34 by the drainage system 15 and collected for pumping, gravity distribution or storage.

Alternative disinfection media 34 may be selected from gravel, charcoal, plastics particles, aggregate and such like, or combinations of these such as to maximise the wetted surface area within a given volume of medium, and yet allow oxygen to diffuse through the medium.

A hand or mechanically operated auger 39 is used to extract a sufficient quantity of stabilised compost periodically to maintain the system in a steady state continuous feed situation. The auger 39 is inserted through an extraction chute 40 leading to the base of the reactor vessel 11. After removing a ventilated extraction chute cap 41 and rotating the auger 39 into the compost a quantity of compost may be extracted.

Referring in particular to FIG. 3, the geotextile matting 38 may be used to separate the compost bed 12 from a bottom chamber 44 wherein treated liquid may be collected for removal by the drain 43 extending to a pump 45.

In practice, where soil irrigation is the proposed method of disinfection, it is believed that the wetted surface area of a single tightly spiralled coil of annular corrugated pipe from the drainage system 15 is sufficient if it covers the entire base of the vessel and extends around the lower layers of stable compost in the composting bed 12. Its is preferable to cover the drainage system 15 with a plastic fabric soil sock or such like, for additional filtration and air contact surfaces.

If employed on a municipal scale, it would be possible to adapt existing treatment vessels to suit this new technology. Trickling filter beds, stabilization ponds, and other such vessels could be converted to drained composting reactor beds, with the wastewater sprayed trickled or otherwise distributed over the surface of successive layers of OMSW.

The loading of the composting reactor bed is such to achieve an even distribution of mixed organic waste substrates over the surface of the compost bed reactor and for ease of handling and rapid break-down, to comminute the OMSW, particularly wood waste and garden waste. One of the chief advances of this technology is that it requires no raking or turning.

The materials which this process can convert into a valuable soil amendment include cellulose fibre based products such as paper, cardboard and box board; natural cellulose fibre products such as cloth, contaminated dressings, facial tissues, sanitary pads, tampons and disposable nappy linings; putrescible wastes such as food wastes; garden wastes such as grass clippings, shredded prunings and leaf litter; house cleaning wastes such as dust, hair and lint; water borne organics such as faeces, sullage particulates, oil and grease; human toilet wastes; dissolved or suspended organic matter and nutrients such as soap, detergents, household chemicals and mineral salts.

Small fragments of un-plated iron, steel wool, wood ash, and charcoal are recommended and beneficial additions. Inert bulking material such as charcoal, may be added to the solids waste input to enhance internal drainage, particularly at higher wastewater loading rates. Small fragments of inert material such as plastic bottle tops, broken glass, rubber, condom latex or small pieces of plastic film will not be detrimental to the operation of the wet composting process.

Large municipal systems could be operated as batch mode systems, allowing a few months of operation without contaminated wastes being added for breakdown or maturation of the surface layers prior to bulk harvesting. If provision is made for the removal of the lower layers of the compost bed, without disturbance or mixing with the contaminated or undigested upper layers, a continuous feed plug flow type arrangement as described above could be employed. It may also be desirable to store the compost in a well ventilated dry environment for a few weeks to achieve a high quality odourless and friable compost.

Depending on the moisture content and quality of the compost, it may be desirable to store the compost in a well ventilated dry environment for a few weeks to achieve a high quality odourless and friable compost. Such an environment may be achieved within the upper portion of the compost extraction chute 40 or within a special chamber within the ventilation exhaust system in which case it would also act as an odour biofilter.

A waste treatment apparatus 10 may be installed in a new dwelling or retro-fitted into an existing dwelling. A pulsed flow of wastewater through the compost bed 12 is preferable as it allows fresh air to be drawn into the compost and exchange oxygen with the biofilm. Preferably, air pore spaces within the compost are not continuously saturated but drain to full capacity after saturation, whereby oxygen may be drawn into the pore spaces. Against this effect, the more slowly the wastewater can be fed through the compost, the more effective the filtration will be.

With a slow rate pulsed liquid flow of wastewater, it has been experimentally observed that the entire compost bed 12 remains aerobic at wastewater infiltration rates in excess of 500 l/m²d. Most of the biological loading is retained near the surface where oxygen is plentiful, and sufficient dissolved oxygen remains in the wastewater to allow the aerobic purification process to continue throughout the pile.

The employment of a compost reactor bed to compost solid organic wastes and to filter out particulate solids, and biologically purify the wastewater, creates a mutually beneficial synergism between the two processes. The wastewater provides warmth, moisture and thermal stability and a carrier for bacteria, fungal spores and other microbes as well as nutrients contained within the wastewater. The compost in turn, provides a medium for physical and biological filtration which, because of the activity of the larger organisms and the physical properties of the compost or humus formed, is substantially protected from clogging despite the high organic loading of the system.

Compost has many characteristics which may make it suitable as a filtration medium, such as a high cation exchange capacity, a high surface area to volume ratio, being finely divided yet open with a renewable network of fine channels and pore spaces.

For municipal scale systems it may be preferable to use a separate disinfection vessel to ensure convenient inspection and maintenance. In an on-site domestic treatment situation, a small fan, or passive ventilation system which can draw several air changes each day through the system will provide adequate ventilation and odour control. It is desirable to draw the air from above the compost surface as any odours will then be drawn under the compost and adsorbed to a certain extent onto the compost. If worm activity is adequate there will surprisingly be very little odour emitted from the compost. This contrasts with traditional bulk compost systems which may heat up to 60°C or more, consuming oxygen faster than it can diffuse into the middle of the pile and causing anaerobic conditions and production of unwanted odours, and the destruction of worms, beetles and such like.

With the present invention, heat is distributed more evenly through the composting bed 12 because of the high moisture content, and heat is removed from the system with the effluent. This allows the process to be maintained at a good temperature for the worms and other mesophilic composting organisms. The heat generated by the biological combustion of the organic waste material may be retained in cold climates by insulating the reaction vessel to maintain temperatures at around 35°C. In more temperate climates, excess heat may be harvested using a heat pump. In contrast to other composting systems, the present invention operates on a substantially steady state basis with the species present within an ecological niche remaining more or less constant with respect to time.

## Claims

1. Organic waste disposal treatment apparatus for simultaneous treatment of solid wastes and waste water comprising a vessel (1) having a inlet (21) for receiving solid wastes, a composting chamber located below the inlet (21) and supporting a compost bed (12) provided with compost organisms so as to keep it open for internal aeration and allow it to act as a filter, a drainage system (15) located below the composting chamber to receive the filtered waste water therefrom, ventilation means for causing air to be drawn into the compost bed to maintain aerobic conditioning therein and into the drainage system (15) to aerate the filtered waste water received from the composting chamber, a drain (43) for draining the filtered waste water from the drainage system (15) control means (32) for distributing waste water onto the compost bed and for controlling the flow thereof, and access means (3a) for accessing and removing of compost formed in the vessel.

2. Apparatus according to Claim 1, wherein the access means includes a closed conveyor for conveying compost from a lower zone of the compost bed, and wherein said vessel is arranged such that in use, organic waste material introduced into said vessel will flow gravitationally towards said access means.

3. Apparatus according to Claim 1 or to Claim 2, wherein said ventilation means includes a fan (28) for inducing an outflow of air from said vessel.

4. Apparatus according to any one of Claims 1 to 3 including an ozone disinfecting filter in the base of the vessel.

5. Apparatus according to Claim 4, wherein the drainage system includes a layer of porous disinfection filter medium (34) sandwiched between two unconnected coils of perforated drainage pipes (35,36) and wherein the ventilation means includes an ozone generator (37) and is arranged to draw air, ozonised by the generator (37), from one of said pipes (35,36) to the other through the filter medium (34).

6. Apparatus according to any preceding claim, including air permeable division means (38) for dividing the drainage system from the compost bed.

7. Apparatus according to Claim 2, wherein said division means is water permeable and divides a bottom portion of said vessel from the compost bed whereby air may be diffused into the compost bed from said bottom portion and water may be drained therethrough from the compost bed.

8. Apparatus according to any preceding claim, wherein said inlet (21) includes the outlet from one or more water closets and said inlet (21) includes a dry toilet located substantially centrally above said vessel.

9. Apparatus according to any preceding claim, wherein said compost bed (12) includes inert bulking material to assist internal drainage.

10. A method of simultaneously treating solid organic waste and waste water in a vessel comprising the steps of preparing a compost bed (12) provided with composting organisms for decomposing any solid organic waste deposited thereon, the organisms being such as to simultaneously keep the compost bed (12) open for internal aeration and to allow the bed (12) to act as a waste water filter, distributing the flow of waste water onto the bed (12) and controlling its flow rate, drawing air through the compost bed and aerating the filtered waste water as it emerges from the compost bed, draining the aerated and filtered waste water from said reactor vessel, and removing the compost formed from said reactor vessel.

11. A method according to Claim 10, including the step of supporting the compost bed (12) on a water impermeable support to separate it from the base of the vessel.

12. A method according to Claim 10 or to Claim 11, including the step of providing a filter (34) in the base of the vessel.

13. A method according to Claim 12 including the step of inducing ozonised air to pass through the filter (34).

14. A method according to Claim 10, wherein the compost bed is built up in a series of layers including undigested upper layers and digested lower layers of organic waste.

15. A method according to Claim 10, wherein the step of compost removal comprises removing the compost periodically from the bottom of the compost bed.

16. A method according to Claim 10, including the step of adding inert bulking material to the compost bed to assist internal drainage.

17. A method according to Claim 10, including the step of collecting waste water and feeding it directly to the vessel.

18. A method according to Claim 10, wherein the solid organic waste is toilet waste.

## Patentansprüche

1. Vorrichtung für die Beseitigung von organischem Abfall zur gleichzeitigen Behandlung von Festabfällen und Abwasser mit einem Behälter (1) mit einem Einlaß (21) zur Aufnahme von Festabfällen, einer Kompostierkammer, die sich unterhalb des Einlasses (21) befindet und ein Kompostbett (12) trägt, welches mit Kompostorganismen versorgt wird, damit es für interne Belüftung offen gehalten wird und als Filter wirken kann, einem unterhalb der Kompostierkammer angeordneten Drainagesystem (15) zum Auffangen des daraus abfließenden filtrierten Abwassers, einer Lüftungseinrichtung zum Hineinziehen von Luft in das Kompostbett zur Aufrechterhaltung aerober Bedingungen im Kompostbett und in das Drainagesystem (15) zur Belüftung des aufgefangenen Wassers aus der Kompostierkammer, einem Ablaß (43) zum Ablassen des filtrierten Abwassers aus dem Drainagesystem (15), einer Steuereinrichtung (32) zur Verteilung von Abwasser auf dem Kompostbett und zur Steuerung des Abwasserstroms und einer Zugangseinrichtung (3a) zum Zugriff auf im Behälter gebildeten Kompost und zu dessen Entnahme.

2. Vorrichtung nach Anspruch 1, bei der die Zugangseinrichtung eine geschlossene Fördereinrichtung zur Förderung von Kompost aus einer unteren Zone des Kompostbetts enthält und der Behälter so angeordnet ist, daß im Betrieb in den Behälter eingespeiste organische Abfallstoffe unter dem Einfluß der Schwerkraft in Richtung der Zugangseinrichtung strömen.

3. Vorrichtung nach Anspruch 1 oder 2, bei der die Lüftungseinrichtung einen Ventilator (28) zum Abziehen von Luft aus dem Behälter enthält.

4. Vorrichtung nach einem der Ansprüche 1 bis 3 mit einem Ozon-Desinfektionsfilter am Boden des Behälters.

5. Vorrichtung nach Anspruch 4, bei der das Drainagesystem eine Schicht aus porösem Desinfektionsfiltermedium (34) enthält, die sich zwischen zwei nicht miteinander verbundenen Schlangen aus perforierten Drainagerohren (35, 36) befindet, und die Lüftungseinrichtung einen Ozongenerator (37) enthält und so angeordnet ist, daß sie durch den Generator (37) ozonisierte Luft aus einem der beiden Rohre (35, 36) durch das Filtermedium (34) in das andere Rohr zieht.

6. Vorrichtung nach einem der vorhergehenden Ansprüche mit einer luftdurchlässigen Abteilung (38) zum Abteilen des Drainagesystems vom Kompostbett.

7. Vorrichtung nach Anspruch 2, bei der die Abteilung wasserdurchlässig ist und einen unteren Teil des Behälters vom Kompostbett abteilt, wodurch Luft aus dem unteren Teil in das Kompostbett hineindiffundieren kann und Wasser durch den unteren Teil aus dem Kompostbett abfließen kann.

8. Vorrichtung nach einem der vorhergehenden Ansprüche, bei der der Einlaß (21) den Auslaß eines oder mehrerer Wasserklosetts enthält und der Einlaß (21) eine im wesentlichen zentral über dem Behälter angeordnete Trockentoilette enthält.

9. Vorrichtung nach einem der vorhergehenden Ansprüche, bei der das Kompostbett (12) inertes Füllmaterial zur Unterstützung der internen Drainage enthält.

10. Verfahren zur gleichzeitigen Behandlung von organischem Festabfall und Abwasser in einem Behälter, bei dem man ein Kompostbett (12) herstellt, das mit Kompostierungsorganismen zur Zersetzung von jeglichem darauf aufgebrachtem organischem Festabfall versorgt wird, wobei die Organismen so beschaffen sind, daß sie gleichzeitig das Kompostbett (12) für interne Belüftung offen halten und gestatten, daß das Bett (12) als Abwasserfilter wirken kann, den Abwasserstrom auf dem Bett (12) verteilt und dessen Durchflußrate steuert, Luft durch das Kompostbett zieht und das filtrierte Abwasser beim Austreten aus dem Kompostbett belüftet, das belüftete und filtrierte Abwasser aus dem Reaktorbehälter abläßt und den gebildeten Kompost aus dem Reaktorbehälter entnimmt.

11. Verfahren nach Anspruch 10, bei dem man das Kompostbett (12) auf einem wasserundurchlässigen Träger lagert und es so vom Boden des Behälters trennt.

12. Verfahren nach Anspruch 10 oder 11, bei dem man im Boden des Behälters ein Filter (34) vorsieht.

13. Verfahren nach Anspruch 12, bei dem man durch das Filter (34) ozonisierte Luft hindurchströmen läßt.

14. Verfahren nach Anspruch 10, bei dem das Kompostbett als Reihe von Schichten einschließlich unzersetzten oberen Schichten und zersetzten unteren Schichten von organischem Abfall aufgebaut ist.

15. Verfahren nach Anspruch 10, bei dem man bei der Kompostentnahme den Kompost in regelmäßigen Zeitabständen am Boden des Kompostbetts entnimmt.

16. Verfahren nach Anspruch 10, bei dem man dem Kompostbett inertes Füllmaterial zur Unterstützung der internen Drainage zusetzt.

17. Verfahren nach Anspruch 10, bei dem man Abwasser sammelt und es direkt dem Behälter zuführt.

18. Verfahren nach Anspruch 10, bei dem man als organischen Abfall Toilettenabfall einsetzt.

## Revendications

1. Appareil de traitement pour l'élimination des déchets organiques, destiné au traitement simultané de déchets solides et d'eaux usées, comprenant une cuve (1) ayant une entrée (21) destinée à recevoir les déchets solides, une enceinte de compostage située en dessous de l'entrée (21) et supportant un lit de compost (12) garni d'organismes de compost de manière à le maintenir ouvert en vue d'une aération interne et de lui permettre de servir de filtre, un système d'évacuation (15) situé en dessous de l'enceinte de compostage, destiné à recevoir les eaux usées filtrées qui en sont issues, un moyen de ventilation pour faire en sorte que l'air soit entraîné jusque dans le lit de compost pour y maintenir le conditionnement aérobie et jusque dans le système d'évacuation (15) pour aérer les eaux usées filtrées reçues de l'enceinte de compostage, une évacuation (43) destinée à évacuer les eaux usées filtrées du système d'évacuation (15), un moyen de régulation (32) destiné à répartir les eaux usées sur le lit de compost et pour en réguler le débit, et un moyen d'accès (3a) permettant l'accès au compost formé dans la cuve et son retrait.

2. Appareil selon la revendication 1, dans lequel le moyen d'accès comporte un transporteur clos destiné à transporter le compost depuis une zone inférieure du lit de compost, et dans lequel ladite cuve est agencée de telle sorte que, lors de son utilisation, les matières de déchets organiques introduites dans ladite cuve s'écoulent par gravité à travers ledit moyen d'accès.

3. Appareil selon la revendication 1 ou la revendication 2, dans lequel ledit moyen de ventilation comporte un ventilateur (28) destiné à induire un flux d'air depuis ladite cuve.

4. Appareil selon l'une quelconque des revendications 1 à 3, comportant un filtre désinfectant à l'ozone à la base de la cuve.

5. Appareil selon la revendication 4, dans lequel le système d'évacuation comporte une couche de milieu filtrant désinfectant poreux (34) en sandwich entre deux serpentins non connectés de conduites d'évacuation perforées (35, 36), et dans lequel le moyen de ventilation comporte un générateur d'ozone (37) et est agencé de manière à entraîner l'air, ozonisé par le générateur (37), depuis l'une desdites conduites (35, 36) jusqu'à l'autre à travers le milieu filtrant (34).

6. Appareil selon l'une quelconque des revendications précédentes, comportant un moyen de séparation perméable à l'air (38) destiné à séparer le système d'évacuation du lit de compost.

7. Appareil selon la revendication 2, dans lequel ledit moyen de séparation est perméable à l'eau et sépare une portion de fond de ladite cuve dudit lit de compost, l'air pouvant ainsi être diffusé dans le lit de compost depuis ladite portion de fond et l'eau pouvant être évacuée à travers celui-ci depuis le lit de compost.

8. Appareil selon l'une quelconque des revendications précédentes, dans lequel ladite entrée (21) comprend la sortie d'un ou de plusieurs W.C. et ladite entrée (21) comprend des toilettes sèches situées substantiellement au centre au-dessus de ladite cuve.

9. Appareil selon l'une quelconque des revendications précédentes, dans lequel ledit lit de compost (12) comprend une matière de charge inerte destinée à faciliter l'évacuation interne.

10. Procédé de traitement simultané de déchets organiques solides et d'eaux usées dans une cuve, comprenant les étapes consistant à préparer un lit de compost (12) pourvu d'organismes de compost en vue de décomposer tout déchet organique solide déposé dessus, les organismes étant tels qu'ils maintiennent simultanément le lit de compost (12) ouvert en vue d'une aération interne et qu'ils permettent au lit de servir de filtre pour eaux usées, à répartir le flux d'eaux usées sur le lit (12) et réguler son débit, à entraîner de l'air à travers le lit de compost et à aérer les eaux usées filtrées à mesure qu'elles émergent du lit de compost, à évacuer les eaux usées aérées et filtrées depuis ladite cuve de réacteur, et à retirer le compost formé de ladite cuve de réacteur.

11. Procédé selon la revendication 10, comprenant l'étape consistant à supporter le lit de compost (12) sur un support imperméable à l'eau en vue de le séparer de la base de la cuve.

12. Procédé selon la revendication 10 ou la revendication 11, comprant l'étape consistant à prévoir un filtre (34) à la base de la cuve.

13. Procédé selon la revendication 12, comprenant l'étape consistant à induire le passage d'air ozonisé à travers le filtre (34).

14. Procédé selon la revendication 10, dans lequel le lit de compost est constitué d'une série de couches comprenant des couches supérieures non digérées et des couches inférieures digérées de déchets organiques.

15. Procédé selon la revendication 10, dans lequel l'étape consistant à retirer le compost comprend le retrait périodique du compost depuis le fond du lit de compost.

16. Procédé selon la revendication 10, comprenant l'étape consistant à ajouter une matière de charge inerte au lit de compost en vue de faciliter l'évacaution interne.

17. Procédé selon la revendication 10, comprenant l'étape consistant à recueillir les eaux usées et à les charger directement dans la cuve.

18. Procédé selon la revendication 10, dans lequel les déchets organiques solides sont des déchets de toilettes.
